# EUROPEAN PATENT APPLICATION

(11) **EP 4 746 187 A1**
(43) Date of publication of application: **20.05.2026**
(21) Application number: 23944699.0
(22) Date of filing: 12.07.2023
(51) Int. Cl.: H01M 50/593, H01M 50/147, H01M 50/30

(54) **INSULATING MEMBER, END CAP ASSEMBLY, ENERGY STORAGE APPARATUS AND ELECTRIC DEVICE**

(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: LI, Maosong, Xiamen, Fujian 361100 (CN)
(74) Representative: Santarelli
(86) International application number: PCT/CN2023/107082
(87) International publication number: WO 2025/010679

(57) **Abstract**

An insulating component (101), an end cover assembly (10), an energy storage apparatus (100), and an electricity-consumption device are provided. The insulating component (101) includes a body plate (11), a first side strip (12A), a boss (13), a first support rib (14A), and a second support rib (14B). The body plate (11) has a first surface (111) and a second surface (112) opposite to each other in a thickness direction of the body plate (11). The first side strip (12A) is located at one end of the body plate (11) in a longitudinal direction (X) thereof and spaced apart from the body plate (11), where two opposite ends of the first side strip (12A) are connected to the body plate (11) via rounded corners. The boss (13) protrudes from the first surface (111). The body plate (11), the first side strip (12A), the boss (13), the first support rib (14A), and the second support rib (14B) are integrally formed.

## Description

### TECHNICAL FIELD

This application relates to the field of energy storage technology, in particular to an insulating component, an end cover assembly, an energy storage apparatus, and an electricity-consumption device.

### BACKGROUND

A rechargeable battery, also known as a secondary battery or storage battery, is a battery that can be recharged after discharge to reactivate active materials and continue to be used. The rechargeable battery has become a primary power source for electricity-consumption devices due to its recyclable nature. As the demand for the rechargeable battery increases, people have higher and higher requirements on their performance in various aspects, especially on energy density per unit volume. The thickness of an end cover assembly of the battery is a crucial parameter affecting the energy density per unit volume, where an excessively thick end cover assembly reduces the energy density per unit volume of the battery.

Currently, the end cover assembly includes an insulating component for insulation between a top cover and a terminal post. Gas flow around the insulating component is turbulent, failing to provide a high-pressure environment for an explosion-proof valve. Furthermore, the thin design of the insulating component makes it difficult to demold and results in insufficient structural strength. Therefore, addressing the issue of turbulent gas pressure in the insulating component and insufficient strength of the insulating component has become critical.

### SUMMARY

The purpose of this application is to provide an insulating component, an end cover assembly, an energy storage apparatus, and an electricity-consumption device that can improve safety performance.

To achieve the objectives of this application, the following technical solution is provided.

In a first aspect, this application provides an insulating component. The insulating component includes: a body plate, a first side strip, a boss, a first support rib, and a second support rib. The body plate has a first surface and a second surface opposite to each other in a thickness direction of the body plate. The first side strip is located at one end of the body plate in a longitudinal direction thereof and spaced apart from the body plate, where two opposite ends of the first side strip are connected to the body plate via rounded corners. The boss is located between the body plate and the first side strip and protruding from the first surface. The first support rib and the second support rib are disposed between the body plate and the first side strip and spaced apart from each other in a width direction of the body plate. The first support rib and the second support rib are curved, the first support rib protrudes in a direction away from the second support rib, and the second support rib protrudes in a direction away from the first support rib. In the thickness direction of the body plate, one end of each of the first support rib and the second support rib is connected to the boss, and a wall thickness of each of the first support rib and the second support rib gradually decreases in a direction away from the boss. The body plate, the first side strip, the boss, the first support rib, and the second support rib are integrally formed.

In this application, by setting both the first support rib and the second support rib to be curved, on the one hand, the support ribs can be adapted to the explosion-proof valve; on the other hand, the gas flow between the first support rib and the second support rib can form a vortex and converge below the explosion-proof valve under the guidance of the two support ribs. As such, when the gas pressure inside the energy storage apparatus increases, the vortex-shaped converged gas flow can generate greater gas pressure, thereby accelerating the valve-opening speed. By gradually reducing the wall thickness of each of the first support rib and the second support rib, the contact surface at the junction between each of the first support rib and the second support rib and the boss is increased. This can reduce the pressure on the boss at the position corresponding to each of the first support rib and the second support rib when the cell is pressed upward, thereby preventing excessive differential stress on the boss from causing cracking and scratching the electrode core, and improving the structural stability and strength of the insulating component. On the other hand, the position of each of the first support rib and the second support rib during injection molding corresponds to the flow channel for injection molding. The wider wall thickness of each of the first support rib and the second support rib facilitates rapid flow of more molten plastic and fast molding, avoiding insufficient plastic or weld lines at the junction between each of the first support rib and the second support rib and the boss, thereby improving production yield and efficiency. Since both the first support rib and the second support rib are arc-shaped, and because the arc-shaped structure may shrink and tighten around a mold boss after injection molding and cooling, designing the first support rib and the second support rib as narrower at the top and wider at the bottom facilitates demolding of the arc-shaped ribs and separation from the mold boss.

In an implementation, the boss includes a first connecting portion, a second connecting portion, and a vent plate, the first connecting portion and the second connecting portion are spaced apart from each other in the width direction of the body plate, the first connecting portion and the second connecting portion protrude from the first surface, two opposite ends of the vent plate are respectively connected to the first connecting portion and the second connecting portion, the vent plate has a third surface facing the first surface, the first support rib and the second support rib are connected to the third surface, and the vent plate defines a vent hole.

By setting the first connecting portion and the second connecting portion to be connected to two opposite ends of the vent plate, and setting each of the first connecting portion and the second connecting portion to be a structure that protrudes from the first surface, the flat surface on which the vent plate is located is lower than the flat surface on which the body plate is located, thereby providing a space for accommodating the explosion-proof valve, the first limiting strip, and the second limiting strip. Furthermore, the first connecting strip and the second connecting strip are connected to the third surface of the vent plate, which can improve the structural strength between the vent plate and the body plate, and improve the compressive strength of the vent plate.

In an implementation, the first support rib and the second support rib are mirror-symmetrical, the first support rib includes a first support portion and a second support portion, and two opposite ends of the second support portion are respectively connected to the first support portion and the vent plate; and in the longitudinal direction of the body plate, a straight-line length of the second support portion is less than or equal to a length of the vent plate.

By setting the straight-line length of the second support portion to be less than or equal to the length of the vent plate, the first gas channel and the second gas channel mentioned above are unobstructed in the width direction, and the gas can flow longitudinally through the first gas channel and the second gas channel. Furthermore, since the first support rib and the first connecting portion are spaced apart, the first gas channel can be in communication with the second gas channel through the spacing between the first support rib and the first connecting portion. When both the first support rib and the second support rib are annular, a near-annular gas flow channel can be formed on the outer periphery of the explosion-proof valve (hereinafter referred to as the annular gas channel). Furthermore, the advantage of the annular gas channel lies in the following. When the energy storage apparatus is under normal pressure, the annular gas channel is more conducive to gas circulation. While under increased pressure, the annular gas channel is more conducive to the formation of a vortex flow that converges towards the explosion-proof valve.

In an implementation, the boss has a first outer side surface and a second outer side surface opposite to each other in the width direction of the body plate, the first outer side surface is formed at the first connecting portion, the second outer side surface is formed at the second connecting portion, each of the first outer side surface and the second outer side surface is an isosceles trapezoid, and for each of the first outer side surface and the second outer side surface, an edge connected to the body plate is a long top edge and an edge connected to the vent plate is a short top edge.

By setting the first connecting portion and the second connecting portion to have a trapezoidal cross section, it is beneficial to use a pair of trapezoidal movable and fixed molds for injection molding during manufacturing. Moreover, the trapezoidal molds can quickly engage with each other without high-precision alignment, and the sealing performance is strong, which can avoid plastic overflow and further improve production efficiency and yield of the product. Meanwhile, since one side connected to the body plate is the long top edge, the connection strength between the first connecting portion as well as the second connecting portion and the body plate can be strengthened, thereby improving the overall structural stability of the insulating component.

In an implementation, the vent plate further includes a first edge and a second edge opposite to each other in the longitudinal direction of the body plate, the first edge is spaced apart from the body plate, and the second edge is spaced apart from the first side strip.

The first edge of the body plate and the body plate are spaced apart and the second edge and the first side strip are spaced apart, thereby increasing the number of gas channels that guide gas to the explosion-proof valve. As such, the gas in the energy storage apparatus can flow quickly near the explosion-proof valve. Thus, after gas is generated inside the energy storage apparatus, the gas can smoothly reach the explosion-proof valve and break through the explosion-proof valve.

In an implementation, in the longitudinal direction of the body plate, a distance from the first edge to the second edge is less than a distance from the body plate to the first side strip. By setting the distance from the first edge to the second edge to be smaller than the distance from the body plate to the first side strip, the distance between the first edge and the body plate, and the distance between the second edge and the first side strip are made larger, thereby forming larger gas channels. After the cell generates gas, the gas can quickly converge beneath the explosion-proof valve through the formed gas channels, thereby achieving rapid response.

In an implementation, the body plate, the vent plate, and the first side strip satisfy: 0.85≤S1/S2≤1.15, where S1 is the minimum distance from the first edge to the body plate and S2 is the minimum distance from the second edge to the first side strip.

Setting the ratio of S1 to S2 within the above range ensures that the channel widths of the formed first gas flow channel and second gas flow channel are similar, thus making the gas flow on both sides of the explosion-proof valve similar. This design prevents the pressure differential caused by uneven gas flow through the first gas flow channel and the second gas flow channel, avoiding accidental opening of the explosion-proof valve due to the pressure differential during the handling of the energy storage apparatus or under external impact.

In an implementation, the vent hole is implemented as multiple vent holes, and the multiple vent holes are arranged in multiple rows and multiple columns. By defining the multiple vent holes on the vent plate, it is beneficial to increase the gas flow rate at the explosion-proof valve, thereby improving the response speed of the explosion-proof valve.

In an implementation, the multiple vent holes are classified into a first vent-hole group, a second vent-hole group, and a third vent-hole group, the first vent-hole group, the second vent-hole group, and the third vent-hole group are arranged sequentially along the width direction of the body plate, the first vent-hole group and the third vent-hole group have the same number of vent holes, the first vent-hole group has a smaller number of vent holes than the second vent-hole group, and the second vent-hole group is configured to be opposite to an explosion-proof valve.

By classifying the multiple vent holes into the first vent-hole group, the second vent-hole group, and the third vent-hole group, and setting the second vent-hole group with more vent holes to correspond to the explosion-proof valve, the gas between the explosion-proof valve and the vent plate can be quickly converged. The first vent-hole group N and the third vent-hole group W have the same number of vent holes, so that the gas flowing into the annular gas channel is uniform, avoiding the pressure differential that could otherwise damage the annular gas channel.

In an implementation, the first support rib and the second support rib are both connected to the vent plate, a connection point between the first support rib and the vent plate is located between the first vent-hole group and the second vent-hole group, and a connection point between the second support rib and the vent plate is located between the second vent-hole group and the third vent-hole group.

By setting the second vent group between the first support rib and the second support rib, the gas flow flowing through the second vent group to the underside of the explosion-proof valve will not flow out in a short time, thereby improving the gas convergence efficiency and further improving the response speed of the explosion-proof valve.

In an implementation, the insulating component further includes a second side strip and a third side strip, the second side strip and the third side strip are both connected to the same side of the body plate, and the second side strip and the third side strip are spaced apart from each other in the width direction, and the two opposite ends of the first side strip are respectively connected to the second side strip and the third side strip via rounded corners; and the first side strip, the second side strip, and the third side strip satisfy: 0.8≤R1/R2≤1.2, 1.8 mm≤R1≤2.2 mm; R1 is a radius of a rounded corner formed by connection of the first side strip and the second side strip, and R2 is a radius of a rounded corner formed by connection of the first side strip and the third side strip.

The two opposite ends of the first side strip are set to be connected to the body plate with rounded corners, thereby reducing harmful friction during the installation of the energy storage apparatus, and preventing the insulating component from being too sharp and abrading and damaging the connector.

In an implementation, the insulating component further includes a recessed platform, the recessed platform is connected to one end of the body plate away from the boss, the recessed platform protrudes from the first surface and has a third outer side surface facing away from the second outer side surface, and the third outer side surface has the same orientation as the first outer side surface.

In an implementation, a first injection-molded portion left by an injection molding process is present on the first outer side surface, and a second injection-molded portion left by the injection molding process is present on the third outer side surface.

In this application, the first injection-molded portion is located on the first outer side surface of the boss, so that the flow direction of the molten plastic is the width direction of the body plate. The demolding direction of the injection mold can be set along the thickness direction of the body plate. The injection-molded port is located above the mold. The molten plastic can be guided by gravity and negative pressure suction to flow quickly from top to bottom to fill the mold cavity. Moreover, because the flow direction of the molten plastic is consistent with the extending direction of the boss and the first side strip, weld lines caused by non-uniform flow of the molten plastic due to the long structures of the boss and the first side strip can be avoided. Meanwhile, the first side strip is connected via rounded corners, during injection molding, when the molten plastic flows downward to the end of the first side strip, the gas entrapments generated after a vortex/vortices is formed by the molten plastic impinging on the inner wall of the mold at a 90-degree angle can be reduced. This can ensure that there are no defects in the plastic at the corners of the first side strip and improves the structural strength of the first side strip at the corners.

By providing the second injection-molded portion on the same side of the recessed platform and the boss, during injection molding of the insulating component, the first injection-molded portion and the second injection-molded portion can be simultaneously used. This can increase the manufacturing speed of the insulating component, and the molten plastic in the injection-molded portions on both sides of the body plate can flow towards the middle of the body plate, thereby improving the overall uniformity of the insulating component. Furthermore, the flow direction of the molten plastic is consistent with the extending direction of the recessed platform, thus avoiding weld lines caused by non-uniform flow of the molten plastic due to the long structure of the recessed platform.

In a second aspect, this application provides an end cover assembly. The end cover assembly includes a cover plate, an explosion-proof valve, and the insulating component according to any one of various implementations of the first aspect, where the second surface of the body plate faces the cover plate, and the explosion-proof valve is disposed on the cover plate and located between the first support rib and the second support rib.

In a third aspect, this application provides an energy storage apparatus. The energy storage apparatus includes a cell assembly, a connector, and the end cover assembly according to the second aspect, where the connector connects the cell assembly and the end cover assembly.

In a fourth aspect, this application provides an electricity-consumption device. The electricity-consumption device includes the energy storage apparatus according to the third aspect, where the energy storage apparatus supplies power to the electricity-consumption device.

### BRIEF DESCRIPTION OF THE DRAWINGS

To more clearly illustrate technical solutions in implementations of this application or the related art, drawings used in the description of the implementations or the related art will be briefly introduced below. Obviously, the drawings described below are merely some implementations of this application. For those skilled in the art, other drawings can be obtained from these drawings without creative effort.
FIG. 1 is a schematic view of an energy storage apparatus in a residential energy storage facility according to an implementation.
FIG. 2 is an exploded view of an energy storage apparatus according to an implementation.
FIG. 3 a perspective view of an insulating component according to an implementation.
FIG. 4 a side view of an insulating component according to an implementation.
FIG. 5 is a perspective view of an insulating component from another perspective.
FIG. 6 is a top view of an insulating component according to an implementation.
FIG. 7 is a cross-sectional view taken along line A-A in FIG. 6.
FIG. 8 is a cross-sectional view taken along line B-B in FIG. 6.

Explanation of reference numerals in the accompanying drawings:
100 - energy storage apparatus; 200 - photovoltaic panel; 300 - wind turbine; 400 - power grid;
10 - end cover assembly, 101- insulating component, 101A - first insulating sub-component, 101B - second insulating sub-component, 102-cover plate, 103 - explosion-proof valve;
11 - body plate, 111 - first surface, 112 - second surface;
12A - first side strip, 12B - second side strip, 12C - third side strip;
13 - boss, 131 - first outer side surface, 132 - second outer side surface, 133 - first injection-molded portion, 13A - first connecting portion, 13B - second connecting portion, 13C - vent plate, 13C1 - first edge, 13C2 - second edge, 13C3 - vent hole, N - first vent-hole group, M - second vent-hole group, W - third vent-hole group;
14A - first support rib, 14A1 - first support portion, 14A2 - second support portion, 14B - second support rib, 14B1 - third support portion, 14B2 - fourth support portion;
15 - recessed platform, 151 - third outer side surface, 152 - fourth outer side surface, 153 - second injection-molded portion;
Q1 - first gas channel, Q2 - second gas channel;
16 - receiving opening, 17 - receiving space;
20 - connector, 201 - first connector, 202 - second connector;
30 - cell assembly, 301 - cell, 302 - positive tab, 303 - negative tab;
40 - housing;
X - longitudinal direction, Y - width direction, Z - thickness direction.

### DETAILED DESCRIPTION

The following will describe technical solutions of implementations of the present disclosure clearly and completely with reference to the accompanying drawings in implementations of the present disclosure. Apparently, implementations described herein are merely some implementations, rather than all implementations, of the present disclosure. Based on the implementations of the present disclosure, all other implementations obtained by those of ordinary skill in the art without creative effort shall fall within the protection scope of the present disclosure.

It should be noted that when a component is to be "fixed" to another component, it can be directly on the other component or can be indirectly attached via an intervening component. When a component is to be "connected" to another component, it can be directly connected to the other component or can be connected via an intervening component.

Unless otherwise defined, all technical and scientific terms used in this application have the same meaning as commonly understood by one of ordinary skill in the technical field of this application. The terminology used in the specification of this application is for the purpose of describing particular implementations only and is not intended to limit this application. The term "and/or" as used in this application includes any and all combinations of one or more of the associated listed items.

The following detailed description of some implementations of this application is provided in conjunction with the accompanying drawings. Unless otherwise specified, the following implementations and features can be combined with each other.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, in order to achieve the purpose of carbon neutralization, the main way to generate green electric energy at present is to develop green energy such as photovoltaic and wind power to replace fossil energy. At present, generation of green electric energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "curtailment of wind and photovoltaics" may occur due to insufficient power demand or insufficient power-power grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

Taking electrochemical energy storage as an example, an energy storage apparatus 1000 is provided in the present disclosure. The energy storage apparatus 1000 includes one group of chemical batteries. Chemical elements in the chemical batteries can be used as an energy storage medium to implement a charging/discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

At present, energy storage may be applied in various application scenarios, including (wind/solar) power-generation-side energy storage, power grid-side energy storage, base-station-side energy storage, user-side energy storage, etc. Corresponding types of energy storage apparatuses include the following.
(1) A large-sized energy storage container applied in a power grid-side energy-storage scenario. The energy storage container may serve as a high-quality active and reactive regulation power source in the power grid, which can realize matching of electric energy loads in time and space, enhance the capacity for integration of renewable energy, and is of great significance in the backup of the power grid system, relieving the pressure of power supply at a peak load, and peak shaving and frequency modulation.
(2) A small and medium-sized energy storage cabinet applied in a user-side industrial and commercial energy-storage scenario (banks, shopping malls, etc.). The small and medium-sized energy storage cabinet mainly operates in a "peak shaving and valley filling" mode. Based on the demand for electricity, there may be a significant price difference in electricity prices at peak and valley periods. When the user has an energy storage device, in order to reduce cost, an energy storage cabinet/box may be usually charged during an electricity-price valley period, and the electricity in the energy storage device may be usually released for use during the electricity-price peak period to save electricity cost.

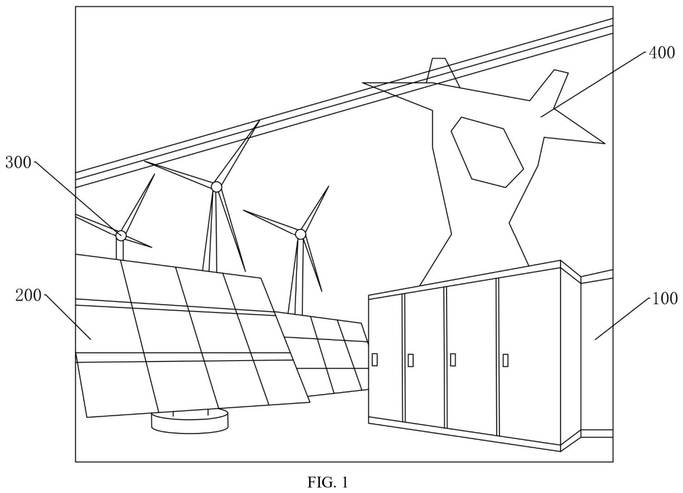

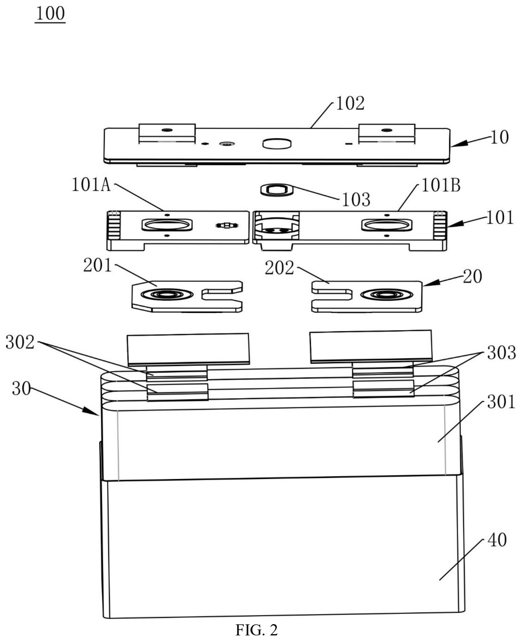

Referring to FIGs. 1 and 2, the energy storage apparatus provided in implementations of this application is applied to an energy storage system. This system includes a power conversion device (photovoltaic panel 200), a wind power conversion device (wind turbine 300), electricity-consumption device (power grid 400), and an energy storage apparatus 100. The energy storage apparatus 100 can serve as an energy storage cabinet and can be installed outdoors. Specifically, the photovoltaic panel 200 can convert solar energy into electrical energy during periods of low electricity prices. The energy storage apparatus 100 stores this electrical energy and supplies it to the power grid 400 during peak electricity demand, or provides power when the power grid 400 experiences a power outage/blackout. The wind power conversion device (wind turbine 300) can convert wind energy into electrical energy. The energy storage apparatus 100 stores this electrical energy and supplies it to the power grid 400 during peak electricity demand, or provides power when the power grid 400 experiences a power outage/blackout. The electrical energy can be transmitted through high-voltage cables.

The number of energy storage apparatuses 100 can be multiple, and the multiple energy storage apparatuses 100 can be connected in series or in parallel. The multiple energy storage apparatuses 100 are supported and electrically connected by a separator plate (not shown). In this implementation, "multiple" means two or more. An energy storage box can be provided outside the energy storage apparatus 100 to accommodate the energy storage apparatus 100.

It is understood that the energy storage apparatus 100 may include, but is not limited to, a single battery, a battery module, a battery pack, and a battery system. The actual application form of the energy storage apparatus provided in implementations of this application may be, but is not limited to, the listed products, and may also be other application forms. The implementations of this application does not strictly limit the application form of the energy storage apparatus 100. In implementations of this application, the energy storage apparatus 100 is illustrated as a multi-cell battery as an example.

Referring to FIG. 2, the energy storage apparatus 100 includes a housing 40, a cell assembly 30, a connector 20, and an end cover assembly 10. The cell assembly 30 includes a cell 301, a positive tab 302, and a negative tab 303, and the positive tab 302 and the negative tab 303 are respectively connected to the cell 301. The cell assembly 30 is disposed inside the housing 40. The connector 20 connects the cell assembly 30 and the end cover assembly 10, and the end cover assembly 10 closes an opening of the housing 40. The connector 20 includes a connector on the positive electrode side (i.e., a first connector 201) and a connector on the negative electrode side (i.e., a second connector 202). The end cover assembly 10 is connected to the first connector 201 and the second connector 202, and connected to the opening of the housing 40 to close the housing 40.

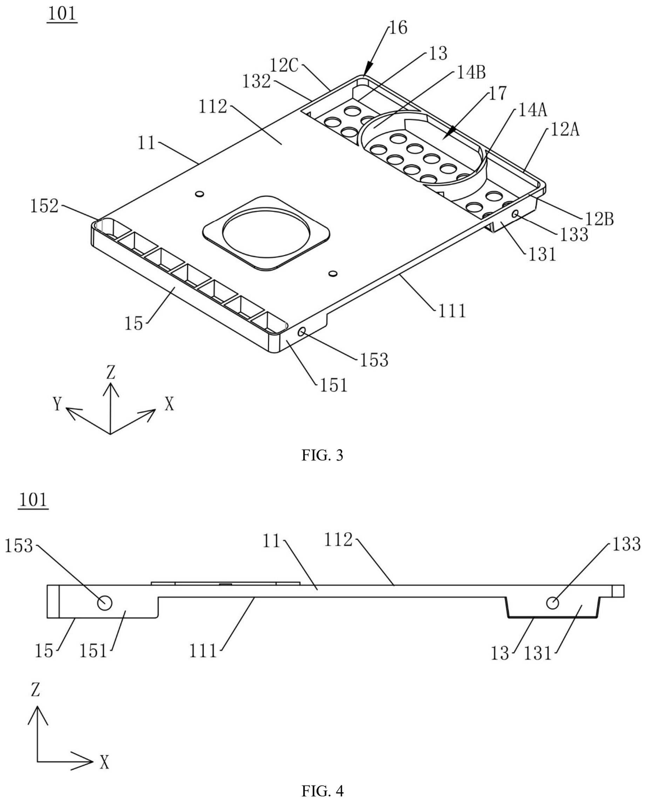

The end cover assembly 10 includes a cover plate 102, an explosion-proof valve 103, and an insulating component 101. The explosion-proof valve 103 is disposed on the cover plate 102, and the explosion-proof valve 103 may be covered by a cover sheet. Referring to FIGs. 3 and 4, the insulating component 101 includes a first insulating sub-component 101A on the positive electrode side and a second insulating sub-component 101B on the negative electrode side. The first insulating sub-component 101A and the second insulating sub-component 101B are connected to the cover plate 102. The first insulating sub-component 101A corresponds to the positive tab 302, and the second insulating sub-component 101B corresponds to the negative tab 303. The first insulating sub-component 101A and the second insulating sub-component 101B are joined along a longitudinal direction X of the cover plate 102. In an implementation, the first insulating sub-component 101A and the second insulating sub-component 101B may be integrally formed or separately formed.

The insulating component 101 is provided in this implementation, referring to FIGs. 2 and 3, specifically the second insulating sub-component 101B. The second insulating sub-component 101B includes a body plate 11, a first side strip 12A, a boss 13, a first support rib 14A, and a second support rib 14B.

The body plate 11 has a first surface 111 and a second surface 112 opposite to each other in its thickness direction Z. The first surface 111 and the second surface 112 are flat surfaces, where the second surface 112 of the body plate faces the cover plate 102. Optionally, the body plate 11 is a square flat plate, so the body plate 11 has a longitudinal direction X, a width direction Y, and the thickness direction Z.

Preferably, the longitudinal direction X of the body plate 11 can be a longitudinal direction X of the energy storage apparatus 100, the width direction Y of the body plate 11 can be a width direction Y of the energy storage apparatus 100, and the thickness direction Z of the body plate 11 can be a height direction of the energy storage apparatus 100.

It should be noted that the longitudinal direction X, width direction Y, and thickness direction Z mentioned below are all defined with reference to the body plate 11.

The first side strip 12A is connected to one end of the body plate 11 along the longitudinal direction X and spaced apart from the body plate 11. Two opposite ends of the first side strip 12A are connected to the body plate 11 with rounded corners.

Optionally, the insulating component 101 further includes a second side strip 12B and a third side strip 12C. The second side strip 12B and the third side strip 12C are both connected to the same side of the body plate 11, and the second side strip 12B and the third side strip 12C are spaced apart from each other in the width direction Y. The two opposite ends of the first side strip 12A are respectively connected to the second side strip 12B and the third side strip 12C.

Furthermore, the body plate 11, the first side strip 12A, the second side strip 12B, and the third side strip 12C together enclose a receiving opening 16. The explosion-proof valve 103 is disposed in the receiving opening 16.

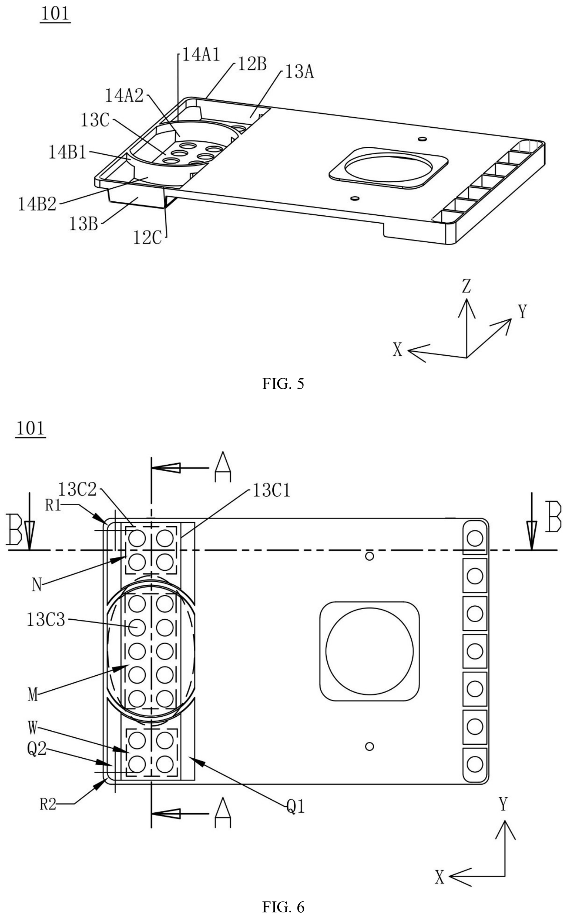

Preferably, the connection between the first side strip 12A and the second side strip 12B is a rounded corner, and the connection between the first side strip 12A and the third side strip 12C is a rounded corner. Referring to FIG. 6, the first side strip 12A, the second side strip 12B, and the third side strip 12C satisfy: 0.8≤R1/R2≤1.2, 1.8 mm≤R1≤2.2 mm (millimeter); where R1 is the radius of the rounded corner formed by connection of the first side strip 12A and the second side strip 12B, and R2 is the radius of the rounded corner formed by connection of the first side strip 12A and the third side strip 12C.

The two opposite ends of the first side strip 12A are set to be connected to the body plate 11 with rounded corners, thereby reducing harmful friction during the installation of the energy storage apparatus 100, and preventing the insulating component 101 from being too sharp and abrading and damaging the connector 20.

The boss 13 is connected to one end of the body plate 11 in the longitudinal direction X and is located between the body plate 11 and the first side strip 12A. The boss 13 protrudes from the first surface 111. The position of the boss 13 corresponds to the explosion-proof valve 103. The boss 13 has a first outer side surface 131 and a second outer side surface 132 opposite to each other in the width direction Y of the body plate 11.

Optionally, the two ends opposite to each other in the width direction Y of the boss 13 are connected to the second side strip 12B and the third side strip 12C respectively. Therefore, the boss 13 is located between the body plate 11 and the first side strip 12A, and the boss 13 and the receiving opening 16 are positioned opposite each other.

Optionally, the boss 13 and the explosion-proof valve 103 are spaced apart to facilitate gas to accumulate below the explosion-proof valve 103 and allow the gas to be directed into the explosion-proof valve 103 through several vent holes. Meanwhile, the boss 13 separates the cell 301 from the explosion-proof valve 103, and the boss 13 acts as a shield for the explosion-proof valve 103, preventing the cell assembly 30 from directly impacting the explosion-proof valve 103 during accidental dropping of the battery and causing the explosion-proof valve 103 to be falsely triggered.

The first support rib 14A and the second support rib 14B are disposed between the body plate 11 and the first side strip 12A. The first support rib 14A and the second support rib 14B are spaced apart from each other in the width direction Y of the body plate 11. The explosion-proof valve 103 is located between the first support rib 14A and the second support rib 14B. The first support rib 14A is closer to the second side strip 12B, and the second support rib 14B is closer to the third side strip 12C.

Optionally, the first support rib 14A and the second support rib 14B are disposed in the receiving opening 16, and two ends opposite to each other in the longitudinal direction X of each of the first support rib 14A and the second support rib 14B are respectively connected to the body plate 11 and the first side strip 12A. One end of each of the first support rib 14A and the second support rib 14B in the thickness direction Z can be connected to the boss 13.

Therefore, the body plate 11, the first side strip 12A, the boss 13, the first support rib 14A, and the second support rib 14B together define the receiving space 17, and the explosion-proof valve 103 is disposed in the receiving space 17.

The body plate 11, the first side strip 12A, the boss 13, the first support rib 14A, and the second support rib 14B are integrally formed, so that the body plate 11, the first side strip 12A, the boss 13, the first support rib 14A, and the second support rib 14B do not require additional connecting structures, providing a compact structure and high connection reliability.

The insulating component 101 is manufactured by an injection molding process. During injection molding, hot molten plastic, molten at high temperature, is injected into a mold cavity of a mold (not shown) through an injection-molded port of the mold. After the hot molten plastic fills the mold cavity, the hot molten plastic cools and solidifies and is then demolded, to obtain the insulating component 101. Specifically, during injection molding, the hot molten plastic is injected through the first injection-molded portion 133. From the perspective of the mold, the first injection-molded portion 133 corresponds to the injection-molded port of the mold. From the perspective of the second insulating sub-component 101B, the first injection-molded portion 133 is located at a certain position on the outer side surface of the insulating component 101. In implementations of this application, the boss 13 is provided with the first injection-molded portion 133 on the first outer side surface 131.

Furthermore, during injection molding, the first injection-molded portion 133 can be positioned at the top. For example, the mold can be set so that the width direction Y of the body plate 11 is in the vertical direction, and the first outer side surface 131 is positioned on the side of the body plate 11 facing away from the center of the earth. Then, the plastic will be subjected to gravity during flow, which can accelerate the flow speed and further improve production efficiency.

It should be understood that after the plastic is molded in the mold, if the plastic is slightly excessive, a protrusion will remain at the first injection-molded portion 133; if the plastic is slightly insufficient, a groove will form at the first injection-molded portion 133. In the case of a residual protrusion, after demolding, if the protrusion is cut or sanded off, it will not remain on the final product, and the first injection-molded portion 133 will form a flat structure flush with other parts. Certainly, in some cases, the protrusion can be retained. In implementations of this application, the first injection-molded portion 133 is a structure of a preset area on the surface of the first outer side surface 131 of the boss 13 facing away from the second outer side surface 132, and the structure of the preset area can be a protrusion, a groove, or a flat surface.

In implementations of this application, the first injection-molded portion 133 is located on the first outer side surface 131 of the boss 13, so that the flow direction of the molten plastic is the width direction Y of the body plate 11. The demolding direction of the injection mold can be set along the thickness direction Z of the body plate 11. The injection-molded port is located above the mold. The molten plastic can be guided by gravity and negative pressure suction to flow quickly from top to bottom to fill the mold cavity. Moreover, thanks to the fact that the flow direction of the molten plastic is consistent with the extending direction of the boss 13 and the first side strip 12A, weld lines caused by uneven filling of the molten plastic due to the excessive length of the boss 13 and the first side strip 12A can be avoided. Meanwhile, the first side strip 12A is connected via rounded corners, during injection molding, this allows the molten plastic to flow downward to reach the end of the first side strip 12A without striking the inner wall of the mold at a 90-degree angle, thereby reducing the formation of a vortex/vortices and the gas entrapments generated due to the vortex/vortices. This can ensure that there are no defects in the plastic at the corners of the first side strip 12A and improves the structural strength of the first side strip 12A at the corners.

In an implementation, referring to FIGs. 3 and 4, the insulating component 101 further includes a recessed platform 15. The recessed platform 15 is connected to one end of the body plate 11 away from the boss 13. The recessed platform 15 protrudes from the first surface 111 and has a third outer side surface 151 facing away from the second outer side surface 132. The third outer side surface 151 has the same orientation as the first outer side surface 131. The third outer side surface 151 has a second injection-molded portion 153.

Optionally, the recessed platform 15 includes the third outer side surface 151 and a fourth outer side surface 152 opposite to each other in the width direction Y. The third outer side surface 151 has the same direction as the first outer side surface 131, and the fourth outer side surface 152 has the same direction as the second outer side surface 132. Understandably, the shape and style of the second injection-molded portion 153 can be the same as that of the first injection-molded portion 133.

Therefore, during injection molding, both the first injection-molded portion 133 and the second injection-molded portion 153 are positioned at the top. For example, if the mold is set so that the width direction Y of the body plate 11 is in the vertical direction, and the first outer side surface 131 and the third outer side surface 151 are positioned on the side of the body plate 11 facing away from the center of the earth, the plastic will flow faster due to gravity, thereby further improving production efficiency.

Optionally, the recessed platform 15 and the boss 13 are located at two ends along the longitudinal direction X of the body plate 11, respectively. Since the recessed platform 15 protrudes from the first surface 111, the recessed platform 15 can abut against the cell assembly 30 positioned below, forming a gap between the first surface 111 and the cell assembly 30 to accommodate the second connector 202, tabs, etc. The side of the recessed platform 15 facing away from the boss 13 is used for welding and fixing to the insulating film (typically Mylar) covering the cell assembly 30, thus holding the cell assembly 30 and improving the vibration resistance of the energy storage apparatus 100.

By providing the second injection-molded portion 153 on the same side of the recessed platform 15 and the boss 13, during injection molding of the insulating component 101, the first injection-molded portion 133 and the second injection-molded portion 153 can be simultaneously used. This can increase the manufacturing speed of the insulating component 101, and the molten plastic in the injection-molded portions on both sides of the body plate 11 can flow towards the middle of the body plate 11, thereby improving the overall uniformity of the insulating component 101. Furthermore, the flow direction of the molten plastic is consistent with the extending direction of the recessed platform 15, thus avoiding weld lines caused by non-uniform flow of the molten plastic due to the long structure of the recessed platform 15.

In an implementation, referring to FIG. 3, the first support rib 14A and the second support rib 14B are curved. The first support rib 14A protrudes in a direction away from the second support rib 14B, and the second support rib 14B protrudes in a direction away from the first support rib 14A.

The first support rib 14A and the second support rib 14B can be arc-shaped structures. Therefore, the body plate 11, the first support rib 14A, the second support rib 14B, and the first side strip 12A can together enclose the receiving space 17 with a rounded rectangular outline.

Optionally, a curvature of the first support rib 14A and a curvature of the second support rib 14B can be the same. Furthermore, the same curvature setting is to fit the shape and structure of the explosion-proof valve 103.

By setting both the first support rib 14A and the second support rib 14B to be curved, on the one hand, the support ribs can be adapted to the explosion-proof valve 103; on the other hand, the gas flow between the first support rib 14A and the second support rib 14B can form a vortex and converge below the explosion-proof valve 103 under the guidance of the two support ribs. As such, when the gas pressure inside the energy storage apparatus 100 increases, the vortex-shaped converged gas flow can generate greater gas pressure, thereby accelerating the valve-opening speed.

In an implementation, referring to FIGs. 5 to 7, in the thickness direction Z of the body plate 11, one end of each of the first support rib 14A and the second support rib 14B is connected to the boss 13, and the wall thickness of each of the first support rib 14A and the second support rib 14B gradually decreases in the direction away from the boss 13.

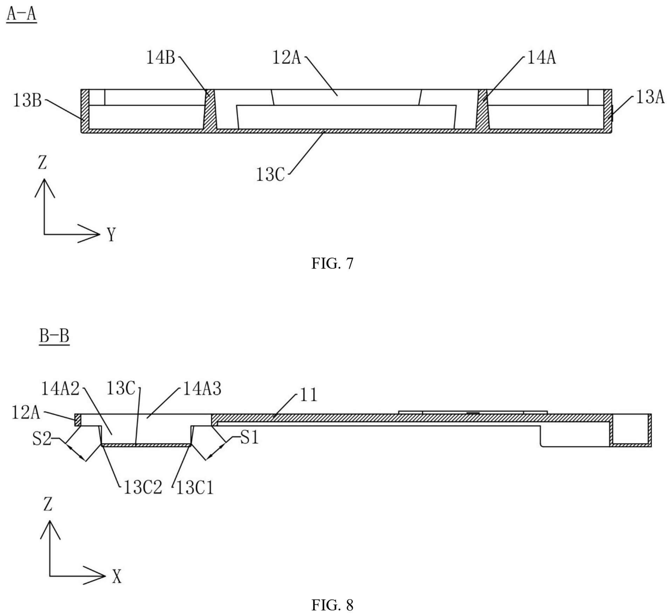

Optionally, referring to FIGs. 5 and 7, the first support rib 14A includes a first support portion 14A1 and a second support portion 14A2. Two opposite ends of the second support portion 14A2 are connected to the first support portion 14A1 and the boss 13, respectively. The thickness of the second support portion 14A2 gradually decreases along a direction from the boss 13 to the first support portion 14A1.

Preferably, the first support rib 14A and the second support rib 14B are mirror-symmetrical. It should be explained that the symmetrical surface is not an actual surface on the insulating component 101, but a virtual surface established to illustrate the structure of the first support rib 14A and the second support rib 14B. The symmetrical surface is located between the first support rib 14A and the second support rib 14B, and is a surface formed by the longitudinal direction X and the thickness direction Z of the body plate 11. Therefore, the following explanation focuses on the first support rib 14A.

The first support rib 14A includes a first support portion 14A1 and a second support portion 14A2 connected in the thickness direction Z of the body plate 11. The second support portion 14A2 is located between the first support portion 14A1 and the boss 13. Two opposite ends of the first support portion 14A1 are connected to the body plate 11 and the first side strip 12A, respectively, and the second support portion 14A2 is used to connect to the boss 13.

Optionally, the second support portion 14A2 has a structure that is narrower at the top and wider at the bottom. The top is the end near the first support rib 14A, and the bottom is the end near the boss 13. Therefore, the thickness of the second support portion 14A2 is the wall thickness.

Therefore, when the second support rib 14B and the first support rib 14A are mirror-symmetrical, the second support portion 14A2 should include a third support portion 14B1 and a fourth support portion 14B2, and the fourth support portion 14B2 should also be a structure that is narrower at the top and wider at the bottom.

By gradually reducing the thickness of the second support portion 14A2, the contact surface at the junction between the second support portion 14A2 and the boss 13 is increased. This can reduce the pressure on the boss 13 at the position corresponding to the second support portion 14A2 when the cell 301 is pressed upward, thereby preventing excessive differential stress on the boss 13 from causing cracking and scratching the electrode core, and improving the structural stability and strength of the insulating component 101. On the other hand, the position of the second support portion 14A2 during injection molding corresponds to the flow channel for injection molding. The wider wall thickness of the second support portion 14A2 facilitates rapid flow of more molten plastic and fast molding, avoiding insufficient plastic or weld lines at the junction between the second support portion 14A2 and the boss 13, thereby improving production yield and efficiency.

Optionally, both the first support portion 14A1 and the second support portion 14A2 are arc-shaped, and the third support portion 14B1 and the fourth support portion 14B2 are arc-shaped. Since both the first support rib 14A1 and the second support rib 14B2 are arc-shaped, and because the arc-shaped structure may shrink and tighten around a mold boss after injection molding and cooling, designing the second support portion 14A2 and the fourth support portion 14B2 as narrower at the top and wider at the bottom facilitates demolding of the arc-shaped ribs and separation from the mold boss.

In an implementation, referring to FIG. 5, the boss 13 includes a first connecting portion 13A and a second connecting portion 13B. The first connecting portion 13A and the second connecting portion 13B are spaced apart in the width direction Y of the body plate 11, and the first connecting portion 13A and the second connecting portion 13B protrude from the first surface 111.

Specifically, the first connecting portion 13A is connected to the second side strip 12B, and the second connecting portion 13B is connected to the third side strip 12C. It should be explained that both the second side strip 12B and the third side strip 12C are connected to the body plate 11, and the thickness of the side strips can be the same as the thickness of the body plate 11. So the first connecting portion 13A and the second connecting portion 13B protrude from the first surface 111, that is, the first connecting portion 13A protrudes from the surface of the second side strip 12B, and the second connecting portion 13B protrudes from the third side strip 12C.

Optionally, the boss 13 also includes a vent plate 13C parallel to the body plate 11. The opposite two ends of the vent plate 13C are respectively connected to the first connecting portion 13A and the second connecting portion 13B. The vent plate 13C has a third surface facing the first surface 111, and the first support rib 14A and the second support rib 14B are connected to the third surface.

The vent plate 13C can be a rectangular plate structure, and two ends of the vent plate 13C in the width direction Y of the body plate 11 are connected to the first connecting portion 13A and the second connecting portion 13B, respectively. The vent plate 13C can be provided with a vent hole 13C3, and the gas in the housing 40 flows into the receiving space 17 through the vent hole 13C3.

Optionally, the side of the vent plate 13C facing away from the cell assembly 30 is the third surface. The second support portion 14A2 and the fourth support portion 14B2 mentioned above are both connected to the third surface. That is, the side with a greater wall thickness of each of the second support portion 14A2 and the fourth support portion 14B2 is connected to the vent plate 13C.

By setting the first connecting portion 13A and the second connecting portion 13B to be connected to two opposite ends of the vent plate 13C, and setting each of the first connecting portion 13A and the second connecting portion 13B to be a structure that protrudes from the first surface 111, the flat surface on which the vent plate 13C is located is lower than the flat surface on which the body plate 11 is located, thereby providing a space for accommodating the explosion-proof valve 103, the first limiting strip, and the second limiting strip. Furthermore, the first connecting strip and the second connecting strip are connected to the third surface of the vent plate 13C, which can improve the structural strength between the vent plate 13C and the body plate 11, and improve the compressive strength of the vent plate 13C.

In an implementation, referring to FIGs. 4 and 5, the first outer side surface 131 is formed at the first connecting portion 13A, and the second outer side surface 132 is formed at the second connecting portion 13B. The first outer side surface 131 and the second outer side surface 132 are both an isosceles trapezoids. For each of the first outer side surface 131 and the second outer side surface 132, an edge connected to the body plate 11 is the long top edge and an edge connected to the vent plate 13C is the short top edge.

The first outer side surface 131 is the side of the first connecting portion 13A facing away from the second connecting portion 13B, and the second outer side surface 132 is the side of the second connecting portion 13B facing away from the first connecting portion 13A.

Optionally, the dimension of each of the first connecting portion 13A and the second connecting portion 13B in the longitudinal direction X of the body plate 11 can be a structure that is wider at the top and narrower at the bottom. The top is the end connected to the side strip, and the bottom is the end connected to the vent plate 13C.

Preferably, both the first connecting portion 13A and the second connecting portion 13B are isosceles trapezoidal structures. The end of the first connecting portion 13A connected to the second side strip 12B is the long top edge, and the end connected to the vent plate 13C is the short top edge. The end of the second connecting portion 13B connected to the third side strip 12C is the long top edge, and the end connected to the vent plate 13C is the short top edge.

By setting the first connecting portion 13A and the second connecting portion to have a trapezoidal cross section, it is beneficial to use a pair of trapezoidal movable and fixed molds for injection molding during manufacturing. Moreover, the trapezoidal molds can quickly engage with each other without high-precision alignment, and the sealing performance is strong, which can avoid plastic overflow and further improve production efficiency and yield of the product. Meanwhile, since one side connected to the body plate 11 is the long top edge, the connection strength between the first connecting portion 13A as well as the second connecting portion and the body plate 11 can be strengthened, thereby improving the overall structural stability of the insulating component 101.

In an implementation, referring to FIG. 6, the vent plate 13C further includes a first edge 13C1 and a second edge 13C2 opposite to each other in the longitudinal direction X of the body plate 11. The first edge 13C1 is spaced apart from the body plate 11, and the second edge 13C2 is spaced apart from the first side strip 12A.

Specifically, along the longitudinal direction X of the body plate 11, two opposite sides of the vent plate 13C are the first edge 13C1 and the second edge 13C2. The first edge 13C1 is the end of the vent plate 13C closer to the body plate 11, and the second edge 13C2 is the end of the vent plate 13C closer to the first side strip 12A. Therefore, there is a gap (or spacing distance) between the first edge 13C1 and the body plate 11, and a gap (or spacing distance) between the second edge 13C2 and the first side strip 12A. This can be understood as the first edge 13C1 and the second edge 13C2 being unconnected to the body plate 11 and the first side strip 12A, respectively.

Optionally, the first edge 13C1 and the second edge 13C2 may be spaced apart from the body plate 11 and the first side strip 12A in the thickness direction Z, respectively. For example, the length of the vent plate 13C (the dimension in the longitudinal direction X of the body plate 11, the same below) may be greater than or equal to the dimension of the receiving opening 16 (the dimension in the longitudinal direction X of the body plate 11, the same below). Therefore, there is only a height difference between the vent plate 13C, the body plate 11, and the first side strip 12A.

Therefore, in the above scheme, the gap between the first edge 13C1 and the body plate 11 can be the first gas channel Q1, and the gap between the second edge 13C2 and the first side strip 12A can be the second gas channel Q2.

The first edge 13C1 of the body plate 11 and the body plate 11 are spaced apart and the second edge 13C2 and the first side strip 12A are spaced apart, thereby increasing the number of gas channels that guide gas to the explosion-proof valve 103. As such, the gas in the energy storage apparatus 100 can flow quickly near the explosion-proof valve 103. Thus, after gas is generated inside the energy storage apparatus 100, the gas can smoothly reach the explosion-proof valve 103 and break through the explosion-proof valve 103.

In an implementation, referring to FIG. 6, in the longitudinal direction X of the body plate 11, a distance from the first edge 13C1 to the second edge 13C2 is less than a distance from the body plate 11 to the first side strip 12A.

Specifically, on basis of the above-described implementation, the vent plate 13C and the receiving opening 16 are arranged opposite to each other. Therefore, the distance from the first edge 13C1 to the second edge 13C2 is the length of the vent plate 13C in the longitudinal direction X, and the distance from the body plate 11 to the first side strip 12A is the dimension of the receiving opening 16 in the longitudinal direction X.

Therefore, there is not only a height difference between the vent plate 13C, the body plate 11, and the first side strip 12A, but also a length difference in the longitudinal direction X. This allows the first gas channel Q1 and the second gas channel Q2 to have larger opening sizes, thereby allowing larger gas flow to pass through the first gas channel Q1 and the second gas channel Q2 per unit time.

By setting the distance from the first edge 13C1 to the second edge 13C2 to be smaller than the distance from the body plate 11 to the first side strip 12A, the distance between the first edge 13C1 and the body plate 11, and the distance between the second edge 13C2 and the first side strip 12A are made larger, thereby forming larger gas channels. After the cell 301 generates gas, the gas can quickly converge beneath the explosion-proof valve 103 through the formed gas channels, thereby achieving rapid response.

In an implementation, referring to FIG. 8, the body plate 11, the vent plate 13C and the first side strip 12A satisfy: 0.85≤S1/S2≤1.15, where S1 is the minimum distance from the first edge 13C1 to the body plate 11 and S2 is the minimum distance from the second edge 13C2 to the first side strip 12A.

It should be explained that the minimum distance from the first edge 13C1 to the body plate 11 should be the straight-line distance from the first edge 13C1 to the side of the body plate 11 facing the first side strip 12A; the minimum distance from the second edge 13C2 to the first side strip 12A should be the straight-line distance from the second edge 13C2 to the side of the first side strip 12A facing the body plate 11. Reference can be made to S1 and S2 marked in FIG. 8 for details.

Therefore, S1 and S2 can be understood as the channel widths of the first gas flow channel Q1 and the second gas flow channel Q2. Setting the ratio of S1 to S2 within the above range ensures that the channel widths of the formed first gas flow channel Q1 and second gas flow channel Q2 are similar, thus making the gas flow on both sides of the explosion-proof valve 103 similar. This design prevents the pressure differential caused by uneven gas flow through the first gas flow channel Q1 and the second gas flow channel Q2, avoiding accidental opening of the explosion-proof valve 103 due to the pressure differential during the handling of the energy storage apparatus 100 or under external impact.

Optionally, the specific value of S1/S2 can be, but is not limited to, 0.85, 0.9, 0.95, 1, 1.05, 1.1, or 1.15. When the ratio of S1 to S2 exceeds the above range, it indicates that the dimensions of the two sides are different, and the gas flow through the first gas channel Q1 will be greater than the gas flow through the second gas channel Q2 (or the gas flow through the second gas channel Q2 will be greater than the gas flow through the first gas channel Q1), resulting in pressure differential or turbulence, which may easily trigger false opening of the explosion-proof valve 103.

In an implementation, in the longitudinal direction X of the body plate 11, the straight-line length of the second support portion 14A2 is less than or equal to the length of the vent plate 13C, and the straight-line length of the fourth support portion 14B2 is less than or equal to the length of the vent plate 13C.

Specifically, based on the above-described implementation, the straight-line length of the second support portion 14A2 in the longitudinal direction X of the body plate 11 should be the straight-line distance between the farthest two ends of the second support portion 14A2 in the longitudinal direction X.

Optionally, the first support portion 14A1 and the second side strip 12B should be directly opposite each other in the width direction Y, and the second support portion 14A2 and the first connecting portion 13A should also be directly opposite each other in the width direction Y. Therefore, when the straight-line length of the second support portion 14A2 is less than or equal to the length of the vent plate 13C, the orthographic projection of the first connecting portion 13A onto the second connecting portion 13B should completely cover the orthographic projection of the second support portion 14A2 onto the second connecting portion 13B.

Optionally, the first support rib 14A and the first connecting portion 13A are spaced apart, and the second support rib 14B and the second connecting portion 13B are spaced apart.

By setting the straight-line length of the second support portion 14A2 to be less than or equal to the length of the vent plate 13C, the first gas channel Q1 and the second gas channel Q2 mentioned above are unobstructed in the width direction Y, and the gas can flow longitudinally through the first gas channel Q1 and the second gas channel Q2. Furthermore, since the first support rib 14A and the first connecting portion 13A are spaced apart, the first gas channel Q1 can be in communication with the second gas channel Q2 through the spacing between the first support rib 14A and the first connecting portion 13A. When both the first support rib 14A and the second support rib 14B are annular, a near-annular gas flow channel can be formed on the outer periphery of the explosion-proof valve 103 (referring to the annular dashed line in FIG. 6, hereinafter referred to as the annular gas channel).

Furthermore, the advantage of the annular gas channel lies in the following. When the energy storage apparatus 100 is under normal pressure, the annular gas channel is more conducive to gas circulation. While under increased pressure, the annular gas channel is more conducive to the formation of a vortex flow that converges towards the explosion-proof valve 103.

In an implementation, referring to FIG. 6, the vent plate 13C has multiple vent holes 13C3 arranged in multiple rows and multiple columns. Specifically, all the vent holes 13C3 on the vent plate 13C can be circular and of the same size. For example, the number of the vent holes 13C3 on the vent plate 13C can be eighteen and the eighteen vent holes 13C3 can be arranged in two columns and nine rows.

By defining the multiple vent holes 13C3 on the vent plate 13C, it is beneficial to increase the gas flow rate at the explosion-proof valve 103, thereby improving the response speed of the explosion-proof valve 103.

In an implementation, referring to FIG. 6, the multiple vent holes 13C3 are classified into a first vent-hole group N, a second vent-hole group M, and a third vent-hole group W (referring to the square dashed line in FIG. 6). The first vent-hole group N, the second vent-hole group M, and the third vent-hole group W are arranged sequentially along the width direction Y of the body plate 11. The number of vent holes 13C3 in the first vent-hole group N and the number of vent holes 13C3 in the third vent-hole group W are the same. The number of vent holes 13C3 in the first vent-hole group N is less than the number of vent holes 13C3 in the second vent-hole group M. The second vent-hole group M is configured to be opposite to the explosion-proof valve 103.

Specifically, the number of vent holes 13C3 in both the first vent-hole group N and the second vent-hole group M can be four. The first vent-hole group N is located near the first connecting portion 13A, and the third vent-hole group W is located near the second connecting portion 13B. Therefore, the number of vent holes 13C3 in the second vent-hole group M is ten, and all ten vent holes 13C3 are connected to the receiving space 17 and correspond to the explosion-proof valve 103.

By classifying the multiple vent holes 13C3 into the first vent-hole group N, the second vent-hole group M, and the third vent-hole group W, and setting the second vent-hole group M with more vent holes 13C3 to correspond to the explosion-proof valve 103, the gas between the explosion-proof valve 103 and the vent plate 13C can be quickly converged. The first vent-hole group N and the third vent-hole group W have the same number of vent holes 13C3, so that the gas flowing into the annular gas channel is uniform, avoiding the pressure differential that could otherwise damage the annular gas channel.

In an implementation, referring to FIG. 6, a connection point between the first support rib 14A and the vent plate 13C is located between the first vent-hole group N and the second vent-hole group M, and a connection point between the second support rib 14B and the vent plate 13C is located between the second vent-hole group M and the third vent-hole group W.

By setting the second vent group M between the first support rib 14A and the second support rib 14B, the gas flow flowing through the second vent group M to the underside of the explosion-proof valve 103 will not flow out in a short time, thereby improving the gas convergence efficiency and further improving the response speed of the explosion-proof valve 103.

In the description of the implementations of this application, it should be noted that the orientation or positional relationship of the terms "center", "upper", "lower", "left", "right", "vertical", "horizontal", "inner", "outer" and other indicators are based on the orientation or positional relationship shown in the accompanying drawings. These are merely for the convenience of describing this application and simplifying the description, rather than intended to indicate or imply that the apparatus or element referred to must have a specific orientation, or be constructed and operated in a specific orientation, and therefore should not be construed as a limitation of this application.

The above-disclosed implementations are merely preferred implementations of this application and should not be construed as limiting the scope of the claims. Those skilled in the art will understand that all or part of the processes for implementing the above implementations and equivalent variations made in accordance with the claims of this application are still within the scope of this application.

## Claims

1. An insulating component, comprising:
a body plate having a first surface and a second surface opposite to each other in a thickness direction of the body plate;
a first side strip located at one end of the body plate in a longitudinal direction thereof and spaced apart from the body plate, wherein two opposite ends of the first side strip are connected to the body plate via rounded corners;
a boss located between the body plate and the first side strip and protruding from the first surface; and
a first support rib and a second support rib, disposed between the body plate and the first side strip and spaced apart from each other in a width direction of the body plate;
wherein the first support rib and the second support rib are curved, the first support rib protrudes in a direction away from the second support rib, and the second support rib protrudes in a direction away from the first support rib;
wherein in the thickness direction of the body plate, one end of each of the first support rib and the second support rib is connected to the boss, and a wall thickness of each of the first support rib and the second support rib gradually decreases in a direction away from the boss; and
wherein the body plate, the first side strip, the boss, the first support rib, and the second support rib are integrally formed.

2. The insulating component according to claim 1, wherein the boss comprises a first connecting portion, a second connecting portion, and a vent plate, the first connecting portion and the second connecting portion are spaced apart from each other in the width direction of the body plate, the first connecting portion and the second connecting portion protrude from the first surface, two opposite ends of the vent plate are respectively connected to the first connecting portion and the second connecting portion, the vent plate has a third surface facing the first surface, the first support rib and the second support rib are connected to the third surface, and the vent plate defines a vent hole.

3. The insulating component according to claim 2, wherein the first support rib and the second support rib are mirror-symmetrical, the first support rib comprises a first support portion and a second support portion, and two ends of the second support portion opposite to each other in the thickness direction of the body plate are respectively connected to the first support portion and the vent plate; and wherein in the longitudinal direction of the body plate, a straight-line length of the second support portion is less than or equal to a length of the vent plate.

4. The insulating component according to claim 2 or 3, wherein the boss has a first outer side surface and a second outer side surface opposite to each other in the width direction of the body plate, the first outer side surface is formed at the first connecting portion, the second outer side surface is formed at the second connecting portion, each of the first outer side surface and the second outer side surface is an isosceles trapezoid, and for each of the first outer side surface and the second outer side surface, an edge connected to the body plate is a long top edge and an edge connected to the vent plate is a short top edge.

5. The insulating component according to any one of claims 2 to **4,** wherein the vent plate further comprises a first edge and a second edge opposite to each other in the longitudinal direction of the body plate, the first edge is spaced apart from the body plate, and the second edge is spaced apart from the first side strip.

6. The insulating component according to claim 5, wherein in the longitudinal direction of the body plate, a distance from the first edge to the second edge is less than a distance from the body plate to the first side strip.

7. The insulating component according to claim 5 or 6, wherein the body plate, the vent plate, and the first side strip satisfy: 0.85≤S1/S2≤1.15, where S1 is a minimum distance from the first edge to the body plate and S2 is a minimum distance from the second edge to the first side strip.

8. The insulating component according to any one of claims 2 to 7, wherein the vent hole is implemented as a plurality of vent holes, and the plurality of vent holes are arranged in a plurality of rows and a plurality of columns.

9. The insulating component according to claim 8, wherein the plurality of vent holes are classified into a first vent-hole group, a second vent-hole group, and a third vent-hole group, the first vent-hole group, the second vent-hole group, and the third vent-hole group are arranged sequentially along the width direction of the body plate, the first vent-hole group and the third vent-hole group have the same number of vent holes, the first vent-hole group has a smaller number of vent holes than the second vent-hole group, and the second vent-hole group is configured to be opposite to an explosion-proof valve.

10. The insulating component according to claim 9, wherein the first support rib and the second support rib are both connected to the vent plate, a connection point between the first support rib and the vent plate is located between the first vent-hole group and the second vent-hole group, and a connection point between the second support rib and the vent plate is located between the second vent-hole group and the third vent-hole group.

11. The insulating component according to any one of claims 1 to 10, wherein the insulating component further comprises a second side strip and a third side strip, the second side strip and the third side strip are both connected to a same side of the body plate, and the second side strip and the third side strip are spaced apart from each other in the width direction, and the two opposite ends of the first side strip are respectively connected to the second side strip and the third side strip via rounded corners;
wherein the first side strip, the second side strip, and the third side strip satisfy:
0.8≤R1/R2≤1.2, 1.8 mm≤R1≤2.2 mm; where R1 is a radius of a rounded corner formed by connection of the first side strip and the second side strip, and R2 is a radius of a rounded corner formed by connection of the first side strip and the third side strip.

12. The insulating component according to any one of claims 4 to 11, wherein the insulating component further comprises a recessed platform, the recessed platform is connected to one end of the body plate away from the boss, the recessed platform protrudes from the first surface and has a third outer side surface facing away from the second outer side surface, and the third outer side surface has the same orientation as the first outer side surface.

13. The insulating component according to claim 12, wherein a first injection-molded portion left by an injection molding process is present on the first outer side surface, and a second injection-molded portion left by the injection molding process is present on the third outer side surface.

14. An end cover assembly, comprising a cover plate, an explosion-proof valve, and the insulating component according to any one of claims 1 to 13, wherein the second surface of the body plate faces the cover plate, and the explosion-proof valve is disposed on the cover plate and located between the first support rib and the second support rib.

15. An energy storage apparatus, comprising a cell assembly, a connector, and the end cover assembly according to claim 14, wherein the connector connects the cell assembly and the end cover assembly.

16. An electricity-consumption device, comprising the energy storage apparatus according to claim 15, wherein the energy storage apparatus supplies power to the electricity-consumption device.
